# EUROPEAN PATENT SPECIFICATION

(11) **EP 0 885 364 B1**
(45) Date of publication and mention of the grant of the patent: **28.05.2003**
(21) Application number: 97908093.4
(22) Date of filing: 20.03.1997
(51) Int. Cl.: F16L 37/18, F16L 35/00

(54) **QUICK CONNECT/DISCONNECT COUPLING**
SCHNELLVERBINDUNGS- UND TRENNKUPPLUNG
RACCORD RAPIDE

(30) Priority: 20.03.1996 CA 2172176
(43) Date of publication of application: 23.12.1998
(73) Proprietor: Gestion Michel Donais, Delson, Quebec J0L 1G0 (CA)
(72) Inventor: LAMONTAGNE, Denis, Venise en Quebec, Quebec J0J 2K0 (CA); DONAIS, Michel, Sainte-Catherine, Quebec J0L 1E0 (CA)
(74) Representative: Kopecky, Helmut, Dipl.-Ing.
(86) International application number: CA9700195
(87) International publication number: WO97035142

(56) References cited:
- DE-U- 9 303 353

## Description

### Technical Field

This invention relates to couplings and more particular to quick connect/disconnect couplings having a male and female member.

### Background Art

Quick connect/disconnect couplings are usually provided at the end of flexible hoses connected to large volume pumps, such as for emptying septic tanks or for pumping water from construction sites, etc. These are also used in the quick coupling of hoses for the handling of toxic or acid liquids. Such a connector is known e.g. from the DE 9 303 353 U.

One of the problems associated with these couplings is that they are subject to a fair amount of abuse and the coupling eventually loses its "round".

In a quick disconnect coupling, a pair of levers is pivotably mounted on the female member for camming cooperation with the male member to quickly attach or detach the male member to the female member. In order to prevent accidental opening of the levers, the levers will be set up so as to be flush-mounted with the coupling or flexible hose, such that if the coupling is dropped, the levers will not accidentally open. However, since the couplings are made to be quickly removed, the levers have to be easily handled by an operator. To facilitate the opening of the levers, pull rings have been provided in the past to locking levers to enable an operator to open the levers and release the coupling. Examples of such pull rings for operating levers of quick connect/disconnect couplings are shown in United States Patent 3,439,942 and published Canadian application 2,117,115.

However, as indicated in Canadian patent application 2,117,115, the use of pull rings with locking levers can often interfere with the operation of the levers.

### Disclosure of the Invention

It is therefore an object of the present invention to provide a quick connect/disconnect coupling which is designed to overcome the problems associated with the prior art.

Another object of the present invention is to provide a quick connect/disconnect coupling which is easy to connect and disconnect by an operator and yet provides a more robust design to resist damaging blows and general abuse of day-to-day usage.

Yet another object of the present invention is to provide a quick connect/disconnect coupling wherein the male and female couplings are provided with reinforced annular rims adapted to provide added protection to the connecting and sealing ends of the couplings.

According to a preferred embodiment of the present invention there is provided a quick connect/disconnect coupling wherein the female coupling is provided with an annular seat adapted to retain a gasket for sealing the male coupling against the female coupling and to prevent the gasket from becoming dislodged during operation, removal and connection of the coupling.

According to another preferred embodiment of the present invention there is provided a quick connect/disconnect coupling wherein the locking levers can easily be opened by an operator and yet can be locked in place to prevent accidental opening.

According to a further preferred embodiment of the present invention there is provided a quick connect/disconnect coupling wherein the female passageway has a flared opening in order to enhance the facility to connect and disconnect the coupling.

In accordance with an embodiment of the present invention, there is provided a quick connect/disconnect coupling comprised of a male coupling adapted to mate with a female coupling, the female coupling forming a passageway to receive the male coupling, and locking means for retaining the male coupling into the female coupling, the locking means being comprised of a locking lever pivotably mounted to the female coupling and having a cooperating projection adapted to extend through the coupling into the passageway to engage an annular cavity of the male coupling to maintain the male coupling into a mating relationship with the female coupling when the locking lever is in a closed position, the male and female couplings being provided with a reinforced annular rim, the reinforced annular rim of the male coupling extending radially of the coupling at a mid-portion thereof, the reinforced annular rim of the female coupling extending radially of the coupling at the distal end thereof, such that when the male coupling is inserted and locked into the female coupling, the reinforced annular rims of the male and female couplings lie adjacent one another, characterized by the reinforced annular rims being each provided with a resilient annular bumper.

### Brief Description of the Drawings

The invention will be better understood by an examination of the following description, together with the accompanying drawings, in which:
Fig. 1 is a perspective view of the quick connect/disconnect coupling of the present invention;
Fig. 2 is a partially sectioned side view of the quick connect/disconnect coupling of the present invention shown in the connected position;
Fig. 3 is an enlarged fragmentary view, partly in cross-section of a detail of the present invention; and
Fig. 4 is a fragmentary partially section side view of another embodiment of the quick disk connect/disconnect coupling of the present invention shown in a connected position.

### Mode For Carrying Out The Invention

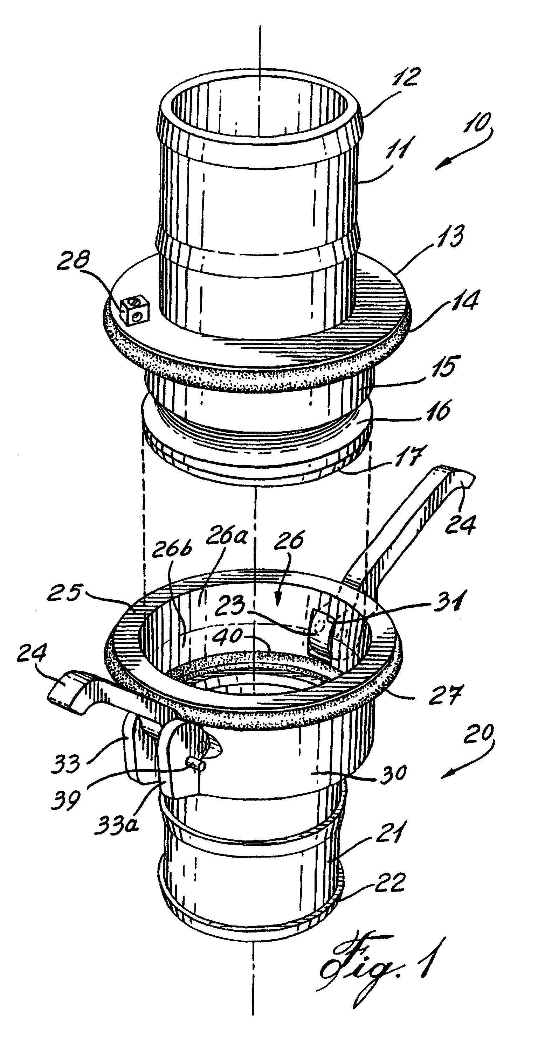

Referring now to Fig. 1, the quick connect/disconnect coupling is illustrated without an attachment to a flexible hose. The male coupling 10 is shown disconnected from the female coupling 20 so as to better illustrate the various features of each coupling. The stem portions 11 and 21 of the male and female couplings respectively, are each provided with one or more pair of ribs 12 and 22 in order to secure a flexible hose thereto. In one embodiment, the stem portions 11 and 21 of the male and female couplings, can be threadably mounted to permit the couplings to be interchanged with other types of couplings.

The male coupling 10 is provided with a reinforced annular rim 13 which extends radially of the coupling at the mid portion thereof. A resilient bumper 14 which can be formed of a rubber O-ring, is used to protect the connecting end 15 of the coupling. The O-ring-shaped bumper 14 fits into an annular groove around the periphery of reinforced annular rim 13.

The connecting end 15 of male coupling 10 is provided with annular cavity 16 adapted to be engaged, when the male coupling is inserted in the female coupling, by the cooperating end 23 of locking lever 24. The periphery 17 of the distal end of the connecting portion of male coupling 10 is provided with an outer edge which is slightly beveled inwardly to facilitate the penetration of the connecting end 15 into the passageway formed by the female coupling 20.

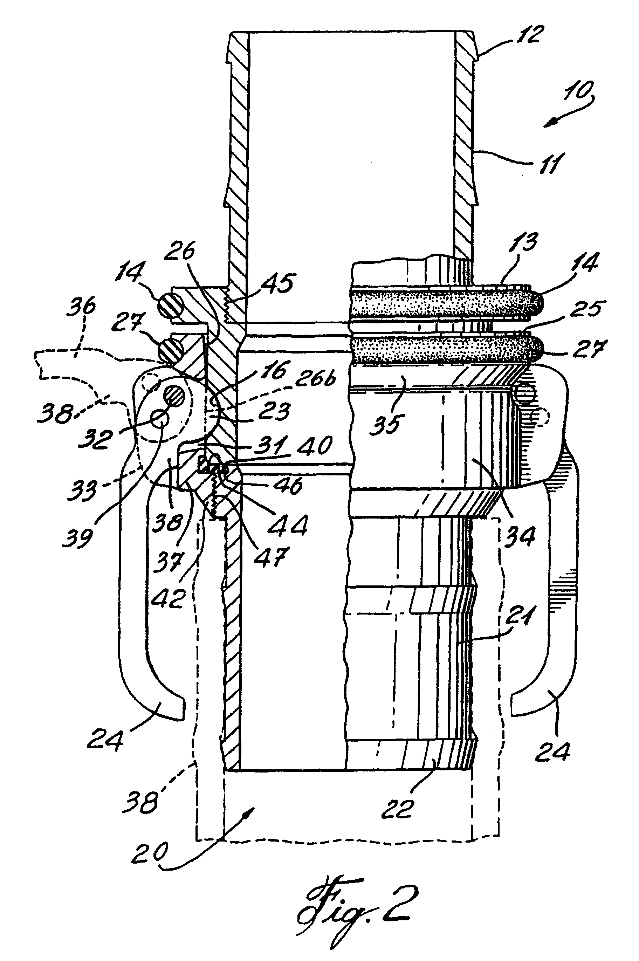

The female coupling 20 is also provided with a reinforced annular rim 25. However, the reinforced annular rim 25 of female coupling 20 extends radially of the coupling at the distal end thereof, such that when the male coupling is inserted and locked into the female coupling, the reinforced annular rim 13 of the male coupling lies adjacent the reinforced annular rim 25 of female coupling 20. The combination of the two reinforced annular rims provides a coupling which is much more resistant to shock or abuse in the field. The female coupling 20 is provided with an inner wall 26 which slightly flares outwardly to facilitate entry of the connecting end 15 of male coupling 10. The inner wall 26 is cylindrical in the bottom portion thereof as indicated at 26b in Fig. 2, up to the level of the cam openings 31. Above that, the wall 26 is flared at 26a. Annular reinforced rim 25 is also provided at its periphery with a cavity to accept an O-ring-shaped bumper 27 made of resilient rubber.

The terminal 28 permits the coupling to be grounded when necessary.

Referring now to Fig. 2, there is shown a sectional side view of the male and female couplings in their connected position. As indicated previously, when the male coupling is inserted and locked into the female coupling, the reinforced annular rims 13 and 25 of the male and female couplings respectively, lie adjacent one another. Locking lever 24 is pivotably mounted to the female coupling 20 for providing a camming cooperating about pivot pin 32. Each locking lever is disposed between a pair of ears 33 and 33a shown in Fig. 1 which are preferably integral to the female coupling. An annular ridge 34 below reinforced rim 25 is provided to reinforce the distal end of female coupling 20 and for the mounting of the locking levers. The upper end 35 of ridge 34 flares outwardly and extends between ears 33 and 33a as shown in the section of Fig. 2 to enable the locking lever 24 to fully open, as shown by phantom line 36. A stopper 37 is provided between the ears 33, 33a below the cam openings 31 to abut against a lip portion 38 of lever 24 to prevent the locking lever from being collapsed into the connecting portion of flexible hose 38. The curved handle of lever 24 enables an operator to reach under the lever to unlock the coupling.

As seen from Fig. 2 a gasket 40 is normally provided in the shoulder 42 of the female coupling, at the base of the inner wall 26. The gasket sits in an annular recess 44. We have discovered that in order to retain the gasket 40 in the recess the wall 46 of the recess is sloped inwardly slightly.

As shown in Fig. 2, the stems 11 and 21 are threadably engaged to the respective couplings. In the case of stem 11 it includes threads 45 which engage threads in the male coupling. Likewise stem 21 has threads 47 that engage the female coupling. This arrangement shows greater versatility and permits the couplings per se to be connected directly to an externally threaded rigid pipe for instance.

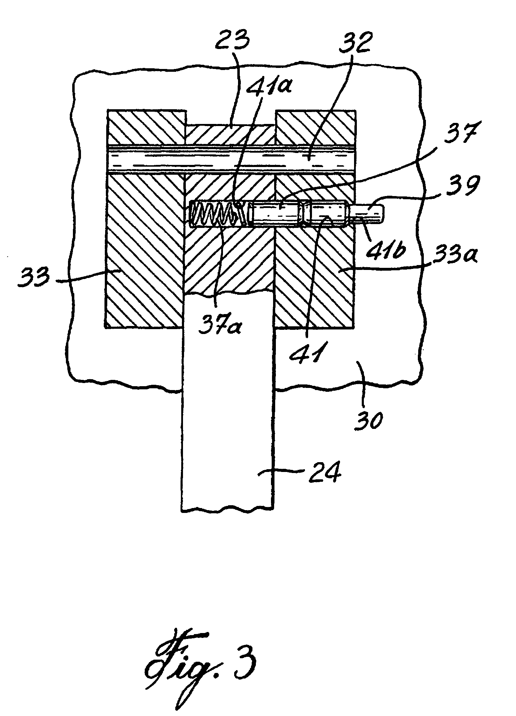

Locking device 39 is illustrated in Fig. 3. A bore 41 extends through one of the ears such as 33a to match with a corresponding bore 41a in the lever 24. The bore 41 is provided with a reduced diameter shoulder 41b. The locking device includes a sliding pin 37 urged outwardly by means of spring 37a. A plunger 39 including a portion which extends outwardly from the neck 41b which slides in the bore 41 is adapted to push the pin 37 against the spring 37a to a position where the pin 37 is completely within the bore 41a of lever 24. At that point, the lever 24 is free to pivot upwardly. Once the lever 24 is pivoted upwardly the bore 41a is no longer in registry with the bore 41, and thus the spring 37a would urge the pin 37 against the flat inner surface of ear 33a. When the lever 24 is closed such as in Fig. 2, the pin 37 will find bore 41 on the urging of spring 37a, and thereby lock the lever 24 in its closed position.

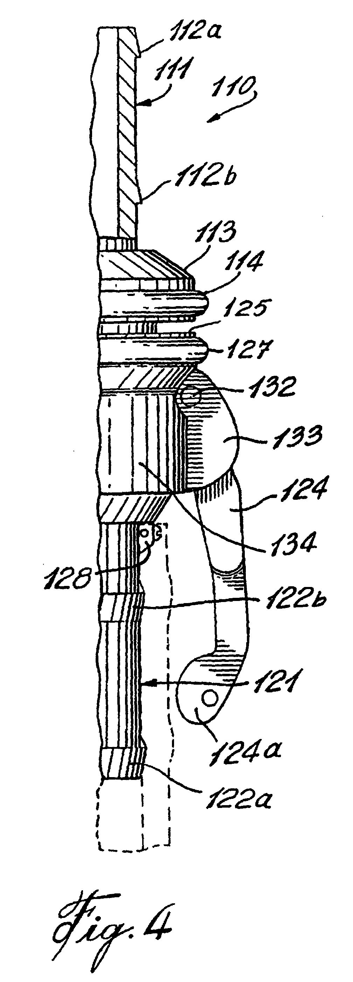

In the embodiment shown in Fig. 4 all of the elements which are similar to the embodiments which are similar to the embodiments in Figs. 1 and 2 have been raised by 100. Notably in this embodiment the bumpers 114 and 127 are cast aluminum integral with the cast bodies of the couplings.

Furthermore, the lever 124 includes two cam ends which are interchangeable for different size couplings. For instance in a smaller coupling the end of lever 124 includes a cam 124a and thus the lever would be reversed. A ground terminal 128 is also provided.

Many other modifications may be contemplated. For instance for food industry the male and female couplings may be made of molded plastics. The interior of the couplings may also be coated or otherwise lined with a suitable metal alloy.

It has also been noted that by designing sloped retaining ribs 112a and 122a of a smaller diameter than retaining ribs 112b and 122b, that the insertion of the hose or flexible pipe on the stems 111 and 121 is made easier.

## Claims

1. A quick connect/disconnect coupling comprised of a male and female coupling member (10,110,20,120) said male coupling member (10) defining a first circular tube (15,17) having a predetermined first outer radius adapted to mate with said female coupling member (20), the male coupling member (10) having a tubular stem (11) extending away from the first circular tube (15,17) for connection with a conduit tube, said female coupling member (20) having a second circular tube (34) with a second outer radius and defining a seat with an inner radius greater than said first outer radius of said first circular tube (15,17) to receive said first circular tube (15, 17), the female coupling member (20) having a tubular stem (21) extending away from the second circular tube (34) thereof for connection with a conduit tube (38); and locking-means (23,24) for retaining said first circular tube (15,17) within the seat of said second circular tube (34), said locking means (23,24) being comprised of a pair of locking levers (24) pivotably mounted to the second circular tube (34), each lever (24) having a cooperating projection (23) adapted to extend through an opening (31) in said second circular tube (34) into said seat to engage a complementary annular cavity (16) defined in the outer surface of the first circular tube (15, 17) to maintain said male coupling member (10) in a mating relationship with said female coupling member (20) when said locking lever (24) is in a closed position, said male and female couplings (10, 20) being provided with a reinforced annular rim (13, 25), the reinforced annular rim (13) of said male coupling (10) extending radially of said coupling (10) at a mid-portion thereof, the reinforced annular rim (25) of said female coupling (20) extending radially of said coupling (20) at the distal end thereof, such that when said male coupling (10) is inserted and locked into said female coupling (20), the reinforced annular rims (13, 25) of said male and female couplings (10, 20) lie adjacent one another, **characterized by**:
said reinforced annular rims being each provided with a resilient annular bumper.

2. A quick connect/disconnect coupling as defined in claim 1, wherein said female coupling member (20) is provided with a tapered inner wall (26) defining the seat and the inner wall flares outwardly to the distal end or the second circular tube and said male coupling member (20) is provided with a tapered outer wall (17) which flares inwardly towards its distal end..

3. A quick connect/disconnect coupling as defined in claim 1, wherein said reinforced annular rims (13, 25) are each provided with an annular concave cavity and the resilient bumper (14, 27) is seated in the concave cavity adapted to absorb the impact of a shock when the couplings are subjected to shock.

4. A quick connect/disconnect coupling as defined in claim 1, 2 or 3 wherein said seat in said female coupling member (20) is provided with an annular shoulder (42) and a gasket (40) on the shoulder (42) is arranged to abut the distal end or said male coupling member (10), when the male member (10) is inserted and locked therein.

5. A quick connect/disconnect coupling as defined in claim 4, wherein said annular shoulder (42) includes an annular recess (44) and the recess (44) is provided with an inner retaining wall (46) which slopes inwardly from the shoulder (42) to provide the recess (44) with a wider base than at the shoulder (42) in order to retain said gasket (40) in said annular recess (44).

6. A quick connect/disconnect coupling as defined in claim 1, wherein said stems (11,21) are adapted for receiving a flexible hose (38), said stems (11,21) being threadably mounted (47) to said male and female coupling members (10,20).

7. A quick connect/disconnect coupling as defined in claim 1, wherein each of said pair of locking levers (24) is pivotably mounted to said female coupling member (20) between a pair of ears (33,33a) integral to said second circular tube (34), said second circular tube (34) having an annular ridge (34) below said locking lever (24) acting as a stop when said locking lever (24) is returned to a closed position, thus maintaining said locking lever (24) spaced apart from said coupling member (20) to enable an operator to easily open the levers (24).

8. A quick connect/disconnect coupling as defined in claim 7, wherein said locking lever 24 and each of said ears (33,33a) being provided with a hole (41) adapted to align and receive a lock pin (37) when said locking lever (24) is placed in a closed position.

9. The quick connect/disconnect coupling as defined in claim 1, wherein the first and second bumpers (113,125) each include a frusto-conical component providing a sloped annular wall between the radial extent of each bumper (113,125) and the respective circular tube (115,134).

10. The quick connect/disconnect coupling as defined in any one of the previous claims, wherein a ground terminal (28,128) is provided on each of the first and second circular tubes (15,17,34) adjacent the respective first and second bumpers (113,125).

## Patentansprüche

1. Schnell-Verbindungs/Trennkupplung, zusammengesetzt aus einem einführenden und einem aufnehmenden Kupplungsglied (10, 110, 20, 120), wobei das einführende Kupplungsglied (10) ein erstes rundes Rohr (15, 17) mit einem vorbestimmten ersten Außenradius, der zum Zusammenpassen mit dem aufnehmenden Kupplungsglied (20) angepasst ist, definiert, wobei das einführende Kupplungsglied (10) einen röhrenförmigen Schaft (11) besitzt, der sich weg vom ersten runden Rohr (15, 17) erstreckt, und zwar zur Verbindung mit einem Leitungsrohr, wobei das aufnehmende Kupplungsglied (20) ein zweites rundes Rohr (34) mit einem zweiten Außenradius besitzt und einen Sitz mit einem Innenradius, der größer ist als der erste Außenradius des ersten runden Rohrs (15, 17), zur Aufnahme des ersten runden Rohrs (15, 17) definiert, wobei das aufnehmende Kupplungsglied (20) einen röhrenförmigen Schaft (21) besitzt, der sich weg von dessen zweitem rundem Rohr (34) erstreckt, und zwar zur Verbindung mit einem Leitungsrohr (38); und Verschlusseinrichtungen (23, 24) zum Halten des ersten runden Rohrs (15, 17) im Sitz des zweiten runden Rohrs (34), wobei die Verschlusseinrichtungen (23, 24) aus einem Paar schwenkbar am zweiten runden Rohr (34) angebrachter Verschlusshebel (24) zusammengesetzt sind und jeder Hebel (24) einen zusammenwirkenden Fortsatz (23) besitzt, der dazu angepasst ist, sich durch eine Öffnung (31) im zweiten runden Rohr (34) in den Sitz zu erstrecken, um in eine in der Außenfläche des ersten runden Rohrs (15, 17) definierte, komplementäre ringförmige Vertiefung (16) einzugreifen, um das einführende Kupplungsglied (10) mit dem aufnehmenden Kupplungsglied (20) in einem zusammenpassenden Verhältnis zu halten, wenn sich der Verschlusshebel (24) in einer geschlossenen Position befindet, wobei die einführende und die aufnehmende Kupplung (10, 20) mit einem verstärkten ringförmigen Rand (13, 25) versehen sind, wobei sich der verstärkte ringförmige Rand (13) der einführenden Kupplung (10) radial zur Kupplung (10) in deren Mittelteil erstreckt und sich der verstärkte ringförmige Rand (25) der aufnehmenden Kupplung (20) radial zur Kupplung (20) an deren distalem Ende erstreckt, so dass die verstärkten ringförmigen Ränder (13, 25) der einführenden und der aufnehmenden Kupplung (10, 20) aneinanderliegen, wenn die einführende Kupplung (10) in der aufnehmenden Kupplung (20) eingesetzt und verriegelt ist, **dadurch gekennzeichnet, dass**:
die verstärkten ringförmigen Ränder jeweils mit einem elastischen ringförmigen Puffer ausgestattet sind.

2. Schnell-Verbindungs/Trennkupplung, wie im Anspruch 1 definiert, wobei das aufnehmende Kupplungsglied (20) mit einer den Sitz definierenden, konisch zulaufenden Innenwand (26) versehen ist, sich die Innenwand nach außen zum distalen Endes des zweiten runden Rohrs öffnet und das einführende Kupplungsglied (20) mit einer konisch zulaufenden Außenwand (17) versehen ist, die sich nach innen zu ihrem distalen Ende öffnet.

3. Schnell-Verbindungs/Trennkupplung, wie im Anspruch 1 definiert, wobei die verstärkten ringförmigen Ränder (13, 25) jeweils mit einer ringförmigen konkaven Vertiefung versehen sind und der elastische Puffer (14, 27) in der konkaven Vertiefung sitzt, welche dazu angepasst ist, den Aufprall eines Stoßes zu absorbieren, wenn die Kupplungen einem Stoß ausgesetzt werden.

4. Schnell-Verbindungs/Trennkupplung, wie im Anspruch 1, 2 oder 3 definiert, wobei der Sitz im aufnehmenden Kupplungsglied (20) mit einer ringförmigen Randleiste (42) versehen ist und eine Dichtung (40) auf der Randleiste (42) solcherart angeordnet ist, um an das distale Ende des einführenden Kupplungsglieds (10) zu stoßen, wenn das einführende Glied (10) darin eingesetzt und verriegelt ist.

5. Schnell-Verbindungs/Trennkupplung, wie im Anspruch 4 definiert, wobei die ringförmige Randleiste (42) einen ringförmigen Einschnitt (44) umfasst und der Einschnitt (44) mit einer inneren Stützwand (46) ausgestattet ist, die sich von der Randleiste (42) nach innen neigt, um den Einschnitt (44) mit einer breiteren Unterfläche als an der Randleiste (42) zu versehen, und zwar um die Dichtung (40) im ringförmigen Einschnitt (44) zu halten.

6. Schnell-Verbindungs/Trennkupplung, wie im Anspruch 1 definiert, wobei die Schäfte (11, 21) zur Aufnahme eines biegsamen Schlauchs (38) angepasst sind und die Schäfte (11, 21) einschraubbar an das einführende und das aufnehmende Kupplungsglied (10, 20) montiert sind (47).

7. Schnell-Verbindungs/Trennkupplung, wie im Anspruch 1 definiert, wobei jeder Hebel von dem Paar Verschlusshebel (24) zwischen einem Paar in das zweite runde Rohr (34) integrierter Henkel (33, 33a) schwenkbar am aufnehmenden Kupplungsglied (20) angebracht ist, wobei das zweite runde Rohr (34) unter dem Verschlusshebel (24) eine ringförmige Rippe (34) besitzt, die beim Zurückbringen des Verschlusshebels (24) in eine geschlossene Position als Stoppvorrichtung fungiert, wodurch der Verschlusshebel (24) vom Kupplungsglied (20) entfernt gehalten wird, um einem Bediener die leichte Öffnung der Hebel (24) zu ermöglichen.

8. Schnell-Verbindungs/Trennkupplung, wie im Anspruch 7 definiert, wobei der Verschlusshebel (24) und jeder Henkel (33, 33a) mit einem Loch (41) versehen sind, das zur Ausrichtung und Aufnahme eines Verriegelungsbolzens (37) angepasst ist, wenn der Verschlusshebel (24) in eine geschlossene Position gebracht wird.

9. Schnell-Verbindungs/Trennkupplung, wie im Anspruch 1 definiert, wobei der erste und der zweite Puffer (113, 125) jeweils einen kegelstumpfförmigen Bestandteil umfassen, welcher zwischen dem radialen Umfang jedes Puffers (113, 125) und dem jeweiligen runden Rohr (115, 134) eine geneigte, ringförmige Wand schafft.

10. Schnell-Verbindungs/Trennkupplung, wie in einem der vorhergehenden Ansprüche definiert, wobei auf jedem ersten und zweiten runden Rohr (15, 17, 34) eine Erdungsklemme (28, 128) vorgesehen ist, und zwar angrenzend an den jeweiligen ersten und zweiten Puffer (113, 125).

## Revendications

1. Raccord rapide constitué d'un élément de couplage mâle et femelle (10, 110, 20, 120), ledit élément de raccord mâle (10) définissant un premier tube circulaire (15, 17) ayant un premier rayon externe prédéterminé conçu pour s'adapter audit élément de raccord femelle (20), l'élément de raccord mâle (10) ayant une tige tubulaire (11) s'étendant à l'opposé du premier tube circulaire (15, 17) pour raccord à un tuyau de conduit, ledit élément de raccord femelle (20) ayant un second tube circulaire (34) avec un second rayon externe et définissant un siège avec un rayon interne plus grand que ledit premier rayon externe dudit premier tube circulaire (15, 17) pour recevoir ledit premier tube circulaire (15, 17), l'élément de raccord femelle (20) ayant une tige tubulaire (21) s'étendant à l'opposé du second tube circulaire (34) de celui-ci pour raccord à un tuyau de conduite (38) ; et moyen de blocage (23, 24) pour maintenir ledit premier tube circulaire (15, 17) à l'intérieur du siège dudit second tube circulaire (34), ledit moyen de blocage (23, 24) est présentement constitué d'une paire de leviers de blocage (24) montés en pivot sur le second tube circulaire (34), chaque levier (24) ayant une saillie coopérant (23) conçue pour s'étendre à travers une ouverture (31) dans ledit second tube circulaire (34) dans ledit siège pour mettre en prise une cavité annulaire complémentaire (16) définie dans la surface externe du premier tube circulaire (15, 17) pour maintenir ledit élément de raccord mâle (10) en relation de raccord avec ledit élément de raccord femelle (20) lorsque ledit levier de blocage (24) est à une position fermée, lesdits raccords mâle et femelle (10, 20) étant pourvus d'un rebord annulaire renforcé (13, 25), le rebord annulaire renforcé (13) dudit raccord mâle (10) s'étendant radialement par rapport audit raccord (10) à une partie intermédiaire de celui-ci, le rebord annulaire renforcé (25) dudit raccord femelle (20) s'étendant radialement par rapport audit raccord (20) à son extrémité distale de sorte que lorsque ledit raccord mâle (10) est inséré et bloqué dans ledit raccord femelle (20), les rebords annulaires renforcés (13, 25) desdits raccords mâle et femelle (10, 20) se trouvent mutuellement adjacents, **caractérisés par** :
lesdits rebords annulaires renforcés étant chacun pourvu d'un bourrelet annulaire résilient.

2. Raccord rapide selon la revendication 1, dans lequel ledit élément de raccord femelle (20) est pourvu d'une paroi interne conique (26) définissant le siège et la paroi interne s'évase vers l'extérieur à l'extrémité distale du second tube circulaire et ledit élément de raccord mâle (20) est pourvu d'une paroi externe conique (17) qui s'évase vers l'intérieur vers son extrémité distale.

3. Raccord rapide selon la revendication 1, dans lequel lesdits rebords annulaires renforcés (13, 25) sont chacun pourvu d'une cavité concave annulaire et le bourrelet résilient (14, 27) est reçu dans la cavité concave conçue pour absorber l'impact d'un choc lorsque les raccords sont soumis à un choc.

4. Raccord rapide selon la revendication 1, 2 ou 3, dans lequel ledit siège dans ledit élément de raccord femelle (20) est pourvu d'un épaulement annulaire (42) et un joint d'étanchéité (40) sur l'épaulement (42) est conçu pour venir en butée sur l'extrémité distale dudit élément de raccord mâle (10) lorsque l'élément mâle est inséré et bloqué dans celui-ci.

5. Raccord rapide selon la revendication 4, dans lequel ledit épaulement annulaire (42) inclut un évidemment annulaire (44) et l'évidemment (44) est pourvu d'une paroi de maintien interne (46) qui est en pente vers l'intérieur depuis l'épaulement (42) pour procurer à l'évidemment (44) une base plus large que celle au niveau de l'épaulement (42) afin de maintenir ledit joint d'étanchéité (40) dans ledit évidemment annulaire (44).

6. Raccord rapide selon la revendication 1, dans lequel lesdites tiges (11, 21) sont conçues pour recevoir un tuyau flexible (38), lesdites tiges (11, 21) étant montées par filet (47) sur lesdits éléments de raccord mâle et femelle (10, 20).

7. Raccord rapide selon la revendication 1, dans lequel chacun de ladite paire des leviers de blocage (24) est monté en pivot sur ledit élément de raccord femelle (20) entre une paire d'oreilles (33, 33a) solidaires dudit second tube circulaire (34), ledit second tube circulaire (34) ayant une nervure annulaire (34) en dessous dudit levier de blocage (24) agissant comme arrêt lorsque ledit levier de blocage (24) est ramené à une position fermée, maintenant ainsi ledit levier de blocage (24) espacé dudit élément de raccord (20) pour permettre à un opérateur d'ouvrir facilement les leviers (24).

8. Raccord rapide selon la revendication 7, dans lequel ledit levier de blocage (24) et chacune desdites oreilles (33, 33a) étant ménagées avec un trou (41) conçu pour aligner et recevoir une broche de verrouillage (37) lorsque ledit levier de blocage (24) est placé à la position fermée.

9. Raccord rapide selon la revendication 1, dans lequel les premier et second bourrelets (113, 125) incluent chacun un composant en cône tronqué procurant une paroi annulaire en pente entre l'étendue radiale de chaque bourrelet (113, 125) et le tube circulaire respectif (153, 154).

10. Raccord rapide selon l'une quelconque des revendications précédentes, dans lequel une borne de terre (28, 128) est pourvue sur chacun des premier et second tubes circulaires (15, 17, 34) adjacents aux premier et second bourrelets respectifs (113, 125).
